# EUROPEAN PATENT SPECIFICATION

(11) **EP 3 200 597 B1**
(45) Date of publication and mention of the grant of the patent: **25.04.2018**
(21) Application number: 15734624.8
(22) Date of filing: 30.06.2015
(51) Int. Cl.: A23D 7/005, A23D 7/00

(54) **POURABLE WATER-IN-OIL COOKING COMPOSITION**
FLIESSFÄHIGE WASSER-IN-ÖL-KOCHZUSAMMENSETZUNG
COMPOSITION DE CUISSON EAU-DANS-HUILE POUVANT ÊTRE VERSÉE

(30) Priority: 11.07.2014 EP 14176779
(43) Date of publication of application: 09.08.2017
(73) Proprietor: UNILEVER N.V., 3013 AL Rotterdam (NL); Unilever BCS Limited, London, EC4Y 0DY (GB); Unilever BCS Europe B.V., 3013 AL Rotterdam (NL); Unilever PLC, London, Greater London EC4Y 0DY (GB)
(72) Inventor: HOGERVORST, Wim Theodorus, 3133 AT Vlaardingen (NL); VERDUYN, Alexander, 3133 AT Vlaardingen (NL); WIERSMA, Jonna Aleide, 3133 AT Vlaardingen (NL)
(74) Representative: Wurfbain, Gilles L.
(86) International application number: PCT/EP2015/064830
(87) International publication number: WO 2016/005231

(56) References cited:
- EP-A1- 2 183 977
- WO-A1-01/35756
- WO-A1-2011/144405
- GB-A- 2 474 937
- US-A- 6 139 897
- US-A1- 2006 029 622
- US-B1- 6 423 363

## Description

### Field of the invention

The present invention is directed to edible pourable water-in-oil cooking compositions suitable for shallow frying. The invention is further directed for a method for making such compositions and to their use. These products are characterized by having improved foaming behavior.

### Background of the invention

Food compositions suitable for shallow frying are well-known. Examples of such food compositions are butter, (liquid) margarine, and cooking milk.

In particular pourable water-in-oil cooking compositions are well appreciated by consumers as easily dosed and perceived to be more healthy than solid or plastic water-in-oil products such as butter or wrapper margarines. Furthermore pourable water-in-oil products are fatty to the touch, which is perceived as more suitable for shallow frying than for example cooking milk which are oil-in-water systems (having a continuous water-phase). Water-in-oil emulsions are characterized by having a continuous fat-phase and a dispersed water-phase, generally in the form of water droplets. The pourability of such compositions is typically evidenced by a Bostwick value of at least 6 at 20 degrees Celsius.

The general process for the manufacture of pourable water-in-oil cooking compositions encompasses the following steps:
1. Providing a water-phase;
2. Providing a fat-phase;
3. Mixing to provide a water-in-oil emulsion.
These steps are usually conducted in a process that involves apparatus that allow heating (e.g. to dissolve emulsifiers and any other ingredients), cooling and mechanical working of the ingredients.

Pourable water-in-oil cooking compositions suitable for frying typically have a relatively large fat-phase to allow suitable frying of food products. For frying food products, the consumer typically places food product in the pan comprising heated frying medium at a temperature above 100 degrees Celsius, such as 160-170 degrees Celsius (i.e. above the typical boiling point of water at ambient conditions). At such conditions any water quickly evaporates typically under formation of some foaming, leaving the fat-phase. Once the water is boiled-off (e.g. also as initially present in the emulsion), the foam typically also disappears rather quickly (if any was formed at all). Consumers consider it desirable that foam develops during the boiling-off of water-phase during the initial heating of the frying medium, but also when later a water-containing food-product is placed in the heated frying medium. Typically when later a water-containing food product is placed in the heated frying medium again some foaming may occur. The formation of foam, which also remains visible for some time after formation (i.e. which does not quickly disappear again) is perceived as healthy, since it imparts an aerated nature to the frying medium during heating and the frying of water-containing food products.

However, in prior art pourable water-in-oil compositions which are suitable for frying it was observed that the amount of foam which develops can be small and the foam which develops (if any) also disappears rather quickly. Therefore there is a desire for a pourable water-in-oil composition, which develops foam during heating of the frying medium and/or when the heated frying medium comes into contact with a water-containing food product; and also wherein the foam has improved stability. In particular it is desirable that the foam which develops covers a large surface area of the frying medium, has improved volume (e.g. thickness of the foam layer) and has improved persistence in time. This cue for the aeration of the frying medium is in particular desirable when frying (water-containing) products which are high in fats and cholesterol and perceived as unhealthy, such as eggs.

The physical storage stability of pourable water-in-oil products is another important characteristic. For example pourable water-in-oil compositions may show undesirable formation of an oil layer on top of the emulsion after storage at temperatures between 5 and 25 degrees Celsius. The formation of such an oil layer is referred to as oil separation.

The color of a food product used as a frying medium can be determined by eye or any other suitable method that is available. In view of increased awareness among some consumers regarding health and naturalness, consumers appreciate a frying medium which has an appreciable color (i.e. is not whitish in appearance as is the case for many refined oils and fats) in particular a gold-yellow color.

A further problem encountered when addressing such problems is that preferably the pourable water-in-oil compositions should have a short ingredient list. Furthermore, additives other than oil, water and common flavors (e.g. salt) which are not perceived to contribute to the health of the consumer are less desirable. The presence of such additives can reduce the healthy-perception of the product and lead to reduced consumer acceptance. Indeed more preferably, the additives other than oil, water and flavors (e.g. salt) have an appreciable positive (perceived) influence on consumer health.

The prior art discloses products which fulfill part of these characteristics, however none of the products disclosed in the art relates to products which show all of these desired characteristics.

For example, WO2001/35756 discloses a water-in-oil pourable and squeezable emulsion comprising anti-spattering agents emulsifiers one/or more salts. The emulsion leads to foam formation during heating. However the amount of foam and the time during which the foam persists is shorter than desirable.

It is an object of the present invention to provide stable pourable water-in-oil cooking composition which has improved foaming behavior, in particular an increased amount of foaming and a more stable foam (e.g. the time the foam (layer) is maintained once formed), during heating of the product and/or during frying of a water-containing food product.

It is a further object of the present invention to provide stable pourable water-in-oil composition suitable for shallow frying which has improved foaming behavior, wherein the one or more additives which affects foaming have a generally (perceived) positive contribution to consumer health.

### Summary of the invention

It was found that one or more of these objectives are achieved by an edible pourable water-in-oil emulsion suitable for shallow frying comprising:
- 40 to 90 wt. % liquid oil;
- 5 to 55 wt. % of water;
- 1 to 20 wt. % of plant sterol esters;
- 0.5 to 8 wt. % of hardstock fat;
- 0.05 to 5 wt. % of sodium chloride, potassium chloride or a combination thereof;
- one or more coloring agents;
- 0.01 to 3 wt. % of water-in-oil promoting emulsifier.

It was surprisingly found that the addition of the plant sterol esters improves the amount of foam which forms when water is boiled-off (e.g. during initial heating or when adding a water-containing food product) and improves its stability (e.g. increases the time a foam layer is maintained). The improvement in said foaming behavior is particularly apparent compared to
- pourable water-in-oil compositions without added plant sterol esters, which otherwise have a generally similar composition.
Surprisingly the improved foaming behavior was even more apparent (compared to similar compositions without added sterol esters) in case of frying high-fat and high-cholesterol products such as eggs.

Thus in a further aspect the invention relates to the use of plant sterol esters in a pourable water-in-oil emulsion to improve foaming behavior.

In a further aspect the invention relates to a process for manufacture of edible pourable water-in-oil emulsions according to the invention.

### Detailed description

Weight percentage (wt. %) is based on the total weight of the product unless otherwise stated. It will be appreciated that the total weight amount of ingredients will not exceed 100 wt. % based on total weight of the product.
The terms 'fat' and 'oil' are used interchangeably. Where applicable the prefix 'liquid' or 'solid' is added to indicate if the fat or oil is liquid or solid at ambient temperature as understood by the person skilled in the art. Ambient temperature is considered to be a temperature of about 20 degrees Celsius. Hardstock fat refers to a fat that is solid at ambient temperature as understood by the person skilled in the art. The terms 'hardstock fat', 'structuring fat' or 'hardstock' are used interchangeably. The terms 'liquid hardstock fat' and 'hardstock fat in liquid form' are used interchangeably.
The pourable water-in-oil water compositions according to the invention have a Bostwick value of at least 6 at 20 degrees Celsius and preferably at least 9.
Fat as used in the present invention refers to edible triglyceride based fat as understood by the person skilled in the art. The terms 'triacylglycerols', 'TAGs', and 'triglycerides' are used interchangeably; they refer to esters of glycerol and three fatty acids. The fatty acid (moieties) of the TAGs may vary in length. The length of a fatty acid is commonly indicated by their carbon number. The fatty acid (moieties) may be saturated, monounsaturated or polyunsaturated.
Pourable stable water-in-oil compositions such as liquid frying products preferably show oil separation of less than 7 vol. %, more preferred less than 5 vol. %, on total product after storage at 25 degrees Celsius for 4 weeks.

### Plant sterol esters

Plant sterol esters (also known as phyto sterol esters) can be classified in three groups, 4-desmethylsterols, 4-monomethylsterols and 4,4'-dimethylsterols. In oils they mainly exist as free sterols and sterol esters of fatty acids although sterol glucosides and acylated sterol glucosides are also present. There are three major phytosterol esters namely esters of beta-sitosterol, stigmasterol and campesterol. Schematic drawings of the components meant are as given in "Influence of Processing on Sterols of Edible Vegetable Oils", S.P. Kochhar; Prog. Lipid Res. 22: pp. 161-188. The respective esters of 5 alpha- saturated derivatives such as sitostanol, campestanol and ergostanol are also encompassed in the term plant sterol ester.

Preferably the emulsion according to the invention comprises from 7 to 18 wt. %, more preferably 9 to 16 wt. % and even more preferably from 10 to 14 wt. % of plant sterol esters.

Preferably the plant sterol ester is selected from the group comprising esters of β-sitosterol, β-sitostanol, campesterol, campestanol, stigmasterol, brassicasterol, brassicastanol or a mixture thereof and more preferably is selected from the groups comprising esters of β-sitosterol, campesterol, stigmasterol, brassicasterol. Suitable sources of plant sterol esters are for example derived from soy bean oil, tall oil, rapeseed oil or combinations of these oils.

Preferably the source of plant sterol esters used in the emulsion according to the invention comprises from 30 to 90 wt. % of sitosterol, from 0 to 40 wt. % of campesterol, from 0 to 40 wt. % of stigmasterol, from 0 to 20 wt. % of brassica sterol or a combination thereof. More preferably the source of plant sterol esters used in the emulsion according to the invention comprises from 30 to 90 wt. % of sitosterol, from 0 to 40 wt. % of campesterol, from 0 to 40 wt. % of stigmasterol and from 0 to 20 wt. % of brassica sterol. Such plant sterols are commercially available from BASF, under the tradename Generolester NG Deso.

Phytosterols (both free and esterified) have a demonstrated blood cholesterol lowering effect and have been proposed as therapeutic agents for hypercholesterolemia. It has been shown frequently now that when plant sterol esters are added to food products they have a beneficial effect of cholesterol levels in particular LDL cholesterol (Weststrate J.A. and Meijer G.W. Eur. J. clin. Nutr. 52 (1998) 334-343.

Free (i.e. non-esterified) plant sterols may be present in the emulsion according to the invention. The emulsion according to the invention preferably comprises from 1 to 15 wt. %, more preferably from 3 to 10 wt. % and even more preferably from 5 to 9 wt. % of free plant sterols, based on total weight of plant sterol esters and free sterols. The presence of free plant sterols in the composition according to the invention further improves foaming behavior (e.g. amount and maintenance of foam in time).

### Liquid oil

The liquid oil according to the invention may be single oil or a mixture of different oils. Preferably at least 50 wt. % of the liquid oil, based on total amount of liquid oil, more preferably at least 70 wt. %, even more preferably at least 80 wt. % and still even more preferably essentially all the liquid oil; is oil of vegetable origin. The liquid oil fraction preferably comprises unmodified vegetable oil such as soybean oil, sunflower oil, linseed oil, low erucic rapeseed oil (Canola), corn oil (maize oil), olive oil, algae oil and blends of vegetable oils. For the purpose of this invention algae oil is considered vegetable oil.

Preferably the liquid oil according to the invention comprises less than 2 wt. %, more preferably less than 1.5 wt. %, even more preferably less than 1.0 wt. % and still even more preferably less than 0.5 wt. % of *trans* FA's based on the total weight of the liquid oil.

Preferably the emulsion according to the invention comprises from 50 to 90 wt. %, more preferably from 60 to 89 wt. % and even and more preferably from 70 to 88 wt. % of liquid oil.

### Water

Preferably the emulsion according to the invention comprises from 10 to 40 wt. %, and more preferably from 15 to 30 wt. % of water. Preferably the pH of the water-phase is 4.0 to 6.5, more preferably form 4.4 to 6.0, even more preferably from 4.5 to 5.5 and still even more preferably from 4.6 to 5.0. Such pH is obtainable for example by addition of an edible acid. Suitable acids include lactic acid, citric acid hydrochloric acid the preferred acid is citric acid.

### Salt

Preferably the emulsion according to the invention comprises from 0.1 to 4 wt. %, more preferably from 0.2 to 3 wt. %, even more preferably from 0.3 to 2 wt. % and still even more preferably from 0.4 to 1.5 wt. % of sodium chloride, potassium chloride or a combination thereof.

### Hardstock fat

The pourable water-in-oil emulsion according to the invention comprises hardstock fat. The presence of hardstock fat in pourable water-in-oil emulsions aims to contribute to stabilization of the emulsion. Unstable pourable frying products show phase separation in the form of oil separation. The solid fat crystals which are needed to provide stability to the emulsion, on the other hand may adversely affect its pourability. The manufacture of pourable frying products therefore requires a hardstock fat with properties which are delicately balanced. Any suitable hardstock may be used.

Preferably the emulsion according to the invention comprises from 0.1 to 5 wt. %, more preferably from 0.5 to 4 wt. % and even more preferably from 1 to 3 wt. % of hardstock fat.

The hardstock fat may be a single fat or a mixture of different fats. The hardstock fat may be fat of vegetable, animal or marine origin, or mixtures thereof. Preferably at least 50 wt. % of the hardstock fat (based on total amount of hardstock fat) is of vegetable origin, more preferably at least 70 wt. % and even more preferably at least 90 wt.%. Still even more preferably the hardstock fat essentially consists of hardstock fat of vegetable origin. The hardstock fat may be modified fat, such as fat which is produced by fractionation, hydrogenation and/or interesterification. In particular fractionation and hydrogenation can be used to alter the melting profile and N-line profile of a fat. The solid fat content (SFC) can be expressed as N-value, as defined in Fette, Seifen Anstrichmittel 80 180-186 (1978). Preferably the hardstock fat according to the invention has a solid fat content N10 of at least 90, a N20 of at least 80 and an N35 of at least 40.

Preferably the hardstock fat has a melting point above 50 degrees Celsius and more preferably above 60 degrees Celsius. Preferably the hardstock fat is derived from fully hydrogenated vegetable oil and fat and more preferably is fully hydrogenated rapeseed oil. Fully hydrogenated high erucic rapeseed oil (shortly denoted as fully hardened rapeseed oil or RP70) is a well known hardstock fat which complies with the above specification. It is suited for the manufacture of satisfactory water-in-oil emulsions which combine good stability with good pourability.

### Water-in-oil promoting emulsifier

Water-in-oil promoting emulsifiers are known in the art. Typically fat soluble emulsifiers are used to in the manufacture of water-in-oil emulsions, whereas water soluble emulsifiers are typically used to improve the stability of oil-in-water emulsions, such as dressings. The Hydrophilic-Lipophilic Balance (HLB) of an emulsifier is a measure of the degree to which it is hydrophilic or lipophilic. The HLB value is a parameter which is describing the solubility of the surfactant. The HLB value is a concept introduced by Griffin in 1950 as a measure of the hydrophilicity or lipophilicity of nonionic surfactants. It can be determined experimentally by the phenol titration method of Marszall; see "Parfumerie, Kosmetik", Vol. 60, 1979, pp. 444-448; and Rompp, Chemistry Lexicon, 8th Edition 1983, p. 1750. An emulsifier having an HLB value of 8 or lower is usually classified as being a water-in-oil promoting emulsifier and as fat soluble. Emulsifiers with an HLB of more than 8 are usually considered oil-in-water promoting.

Preferably the pourable water-in-oil emulsion according to the invention comprises from 0.05 to 2 wt. %, more preferably from 0.1 to 1.5 wt. % and even more preferably form 0.15 to 1 wt. % of water-in-oil promoting emulsifier.

Well known examples of suitable emulsifiers include lecithin, mono- and/or diglycerides and citric acid esters.

### Monoglyceride and diglycerides

Monoglycerides and diglycerides are molecules comprising a glycerol moiety esterified to a single, respectively two fatty acid residues. Generally mono-, and or diglycerides can be characterized by the tail-length and the degree of unsaturation of their fatty acid residue. The mono-, and or diglycerides according to the invention (if present) may be a single type or a mixture of different types of mono-, and or diglycerides. Mono-, and or diglycerides according to the invention are commercially available, for example under the trade name Dimodan HP (98 wt. % of saturated fatty acid residues; Supplier: Danisco), Dimodan RT (20 wt. % of saturated fatty acid residues; Supplier: Danisco) or Dimodan U/J (15 wt. % of saturated fatty acid residues; Supplier: Danisco).

Citric acid and a monoglyceride (monoester of glycerol and a fatty acid) or diglyceride (di-ester of glycerol and two fatty acids) can form an ester under certain reaction conditions. The resulting reaction product mainly comprises citric acid, wherein one carboxylic group is esterified with one of the free hydroxyl groups of the glycerol backbone of the mono- or diglyceride. Some di- or even tri-esterified citric acid may be present in the resulting reaction mixtures, depending on the specific reaction conditions used such as temperature and reaction time. According to a preferred aspect of the invention the ester (if present) is a citric acid ester of a monoglyceride and diglyceride mixture, comprising at least 30 wt% of the monoglyceride, more preferred at least 55 wt%, most preferred at least 90 wt% of the monoglyceride. Citric acid esters are commmercialy available under the tradenames Grindstedtm CITREM LR 10, Grindstedtm CITREM BC-FS, Lamegin ZE 306, Myvatem SC, CITREM 2931, Pålsgaard 3301, Lamegin ZE 309 liquid.

Lecithin is a collective name of products which consist of a few well-defined substances and many more or less well-defined substances in varying amounts. Common non-purified lecithin (crude lecithin) typically consists of about one half or more of phospholipids. Other substances present in crude lecithin are fats (typically about 35 wt. %), free fatty acids, glycolipids, tocopherols, sterols and carbohydrates. Most commercially available lecithins are prepared on the basis of soybeans, but lecithin is also found inter alia in animal sources, such as yolk and other vegetable sources, such as in rapeseed and sunflower oil. Preferably the lecithin according to the invention (if present) is derived from a vegetable source, more preferably soybeans, sunflower seeds or rapeseed or any a combination thereof; and even more preferably is derived from a combination of sunflower seeds and soybeans. Lecithin may be treated, such as by hydrogenation or hydrolysation, to alter the HLB-value. Suitable lecithin according to the invention is commercially available, for example under the trade name Cetinol (Supplier: Sime Darby, Unimills).

Preferably the water-in-oil promoting emulsifier according to the invention comprises lecithin, monoglyceride, diglyceride, citric acid ester or a combination thereof and more preferably comprises lecithin. Preferably the water-in-oil promoting emulsifier according to the invention has an HLB value of below 8, more preferably an HLB of 2 to 6 and even more preferably an HLB of 3 to 5.

### One or more coloring agents

The emulsion according to the invention comprises one or more coloring agents. The amount and types of coloring agents required to obtain a specific color is known to the person skilled in the art and/or by the (commercial) supplier.

Preferably the one or more coloring agents used are of a suitable type and amount to provide a yellowish/golden hue, such as to approximate the color of natural dairy butter. This can for example be achieved by adding a suitable amount of (beta)-carotene. An important advantage for using (beta-)carotene as additive is that it is believed that its consumption can contribute to consumer heath, for example as a source of pro-vitamin A. Preferably the one or more coloring agents according to the invention comprises (or essentially is) carotene and more preferably beta-carotene. Even more preferably the pourable emulsion according to the invention comprises beta-carotene in an amount is from 0.5 to 500 mg/kg (i.e. mg beta-carotene per kg emulsion), more preferably from 1 to 100 mg/kg and even more preferably from 5 to 50 mg/kg. Beta-carotene is commercially available in concentrated form (30 % oily suspension) (Supplier: BASF, DSM).

Preferably the emulsion according to the invention does not comprise red-palm oil and/or unrefined fats. Unrefined fats are fats which have not undergone bleaching and/or deodorization steps. These steps, as well as a general description of the refining process to produce edible oils can be found on page 189 - 207 of 'The lipid handbook', Gunstone et.al. 1986.

### Optional ingredients

Optionally the pourable water-in-oil emulsion according to the invention may comprise further ingredients, such as vitamins, minerals, flavors, herbs and spices. However, the features of the invention as specified in claim 1 should be adhered to (e.g. from 0.5 to 8 wt. % of hardstock fat).

### Process to manufacture water-in-oil emulsion

The water-in-oil emulsions according to the invention can be manufactured using well established methods as known in the art. The process may simply involve combining all ingredients and mixing under sufficient shear and for a sufficient period of time to homogenize the ingredients and provide a pourable water-in-oil emulsion.

In a preferred process a water-phase and oil-phase are first (separately) prepared before being combined. Thus in a further aspect the present invention provides a process for the manufacture of the edible pourable water-in-oil emulsion according to the invention, comprising the steps:
a) providing a water-phase;
b) providing an oil-phase;
c) mixing the water-phase and the oil-phase to provide the edible pourable water-in-oil emulsion;
wherein the remaining ingredients are added at any of step a), b) or c); or in parts at any combination of said steps.

Preferably the water-phase is prepared by adding the salt and other water-soluble ingredients to the water. The water-phase may be subject to heating and/or mixing to suitably dissolve and homogenize the water-phase ingredients. Preferably the oil-phase is prepared by adding the oil-soluble ingredients to the liquid oil. The oil-phase may be subject to heating and/or mixing to suitably dissolve and homogenize the oil-phase ingredients. The water-in-oil promoting emulsifier may be added to either the water-phase or the oil-phase, but preferably to the oil-phase.

The one or more coloring agents according to the invention are preferably added in a form of a concentrated additive, wherein said additive preferably has a concentration of at least 1 wt.%, more preferably of at least 10 wt.% and even more preferably of at least 20 wt.% of coloring agent, based on the total weight of the additive. For example in case the coloring agent is beta-carotene, said additive preferably has a concentration of at least 10 wt. % of beta-carotene based on the total weight of the additive (e.g. a 10 wt. % concentration of beta-carotene in vegetable oil). The one or more coloring agents can be added to the water-phase and/or the oil-phase, preferably as in accordance with their solubility. For example, beta-carotene is oil-soluble and therefore preferably is added to the oil-phase in the manufacture process.

Plant sterol esters and free sterols have low solubility in oil and water (at ambient temperature). Preferably the sterol esters and the optionally present free sterols are prepared (e.g. as pre-mix) by dissolving in part of the liquid oil, such as by applying sufficient heating (e.g. to 70 degrees Celsius) to dissolve; and subsequently added at at any of step a), b) or c); or in parts at any combination of said steps. Preferably the hardstock fat is prepared (e.g. as pre-mix) by dissolving in part of the liquid oil, such as by applying sufficient heating (e.g. to 70 degrees Celsius) to dissolve; and subsequently added at at any of step a), b) or c); or in parts at any combination of said steps. Optionally the sterol esters, the optionally present free sterols and the hardstock fat may be prepared together as a single pre-mix before said addition at steps a), b) or c). Heating only part of the liquid oil to dissolve the sterol esters, the optionally present free sterols, and/or hardstock fat reduces energy requirement compared to heating the whole of the oil - and/or water-phase. Subsequently the preferably prepared pre-mix(es) may be added to the water-phase and/or the oil-phase preferably under sufficient shear. The temperature of the water-phase and/or oil-phase is preferably below the crystallization point of the sterols and hardstock fat as to allow crystallization under shear, which improves dispersion of the sterol esters, the optionally present free sterols, and the hardstock fat.

Finally the water-phase and oil-phase are combined, typically by mixing in a high shear mixer to provide the water-in-oil emulsion according to the invention. The mixing may be performed batch wise or in a continuous manner. Suitable mixing devices are known in the art, such as steered vessels equipped with an Ultra-turrax, pin-stirrer and fluid dynamic mixers.

The mixing in step c) is preferably performed to provide an edible pourable water-in-oil emulsion wherein the dispersed water-phase droplets have an average size (as measured in D3,3) of at most 50 micrometer, more preferably of at most 30, even more preferably of at most 20, still even more preferably of at most 10.

The D3,3 of the water-phase droplets can be measured according to the following procedure: The normal terminology for Nuclear Magnetic Resonance (NMR) is used throughout this method. On the basis of this method the parameters D3,3 and exp(σ) of a lognormal water droplet size distribution can be determined. The D3,3 is the volume weighted mean droplet diameter and σ (i.e. e^sigma) is the standard deviation of the logarithm of the droplet diameter. The NMR signal (echo height) of the protons of the water in a water-in-oil emulsion are measured using a sequence of 4 radio frequency pulses in the presence (echo height E) and absence (echo height E*) of two magnetic field gradient pulses as a function of the gradient power. The oil protons are suppressed in the first part of the sequence by a relaxation filter. The ratio (R=E/E*) reflects the extent of restriction of the translational mobility of the water molecules in the water droplets and thereby is a measure of the water droplet size. By a mathematical procedure, which uses the log-normal droplet size distribution, the parameters of the water droplet size distribution D3,3 (volume weighed geometric mean diameter) and σ (distribution width) are calculated. A Bruker magnet with a field of 0.47 Tesla (20 MHz proton frequency) with an air gap of 25 mm is used (NMR Spectrometer Bruker Minispec MQ20 Grad, ex Bruker Optik GmbH, DE).

The average size of the water-phase droplets can for example be affected by applying sufficient time and/or mixing intensity during the mixing step c).

Some lower limit to the viscosity of the water-in-oil emulsion according to the invention is desirable to have more controlled pouring of the composition when desiring to apply a certain amount e.g. to a frying pan. As the water-in-oil emulsion is typically poured at temperature of about 5 degrees Celsius (e.g. when freshly taken from cold storage in a fridge) the viscosity of the pourable water-in-oil emulsion according to the invention as measured at 5 degrees Celsius is considered relevant. It was surprisingly found that addition of sterol esters according to the invention also leads to an increase in the viscosity of the pourable water-in-oil emulsion. Preferably the viscosity of the pourable water-in-oil emulsion according to the invention, as measured at 5 degrees Celsius and in accordance with the Brookfield measuring technique as described herein, is from 750 to 2000 mPa s and even more preferably from 1200 to 1800 mPa s.

### Use of the plant sterol esters

The pourable edible water-in-oil emulsions according to the invention comprising plant sterol esters, show improved foaming behavior compared to similar water-in-oil emulsions without added plant sterol esters.

Therefore the invention also relates to the use of plant sterol esters in a pourable water-in-oil emulsion to improve foaming behavior, preferably during frying. More preferably said use to improve foaming behavior relates to improving the amount of foam during frying, the time a foam layer is maintained during frying or a combination thereof.

Preferred aspects of the invention disclosed herein in the context of one aspect of the invention (e.g. preferred levels of water in the emulsion) are also applicable to the other aspect(s) as well, *mutatis mutandis* (e.g. preferred levels of water used in the manufacture process to provide the emulsion

The invention is now illustrated by the following non limiting examples.

### Examples

### Viscosity

The viscosity was determined with a Brookfield viscometer (Type: DV-II Pro; Supplier: Brookfield) suitable for making viscosity measurements of a 600 ml beaker, using a spindle-type 4. The spindle was attached to the lower shaft of the viscometer. Next the spindle was lowered in the emulsion until the fluid level reached the immersion groove on the shaft of the spindle. The viscosity was measured of the emulsion having a temperature of 5 degrees Celsius with the viscometer operating at 100 rpm.

### Pourability

Pourability is measured according to the standard Bostwick protocol. The Bostwick equipment consists of a 125 ml reservoir provided with an outlet near the bottom of a horizontally placed rectangular tub and closed with a vertical barrier. The tub's bottom is provided with a 25 cm measuring scale, extending from the outlet of the reservoir. When equipment and sample both have a temperature of 5 degrees Celsius, the reservoir is filled with 125 ml of sample after it has been shaken by hand ten times up and down. When the closure of the reservoir is removed the sample flows from the reservoir and spreads over the tub bottom. The path length of the flow is measured after 30 seconds. The value, expressed as cm per 30 seconds is the Bostwick rating, which is used as yard stick for pourability.

The maximum value that can be determined with this measurement is 23.

### Determination of foaming

A sample of 25 g of product is place in a glass dish, which is heated using an electrical plate to about 165 degrees Celsius. Any foam formation (and the disappearance thereof) is observed and noted by eye during initial heating of the cooking product. After disappearance of the foam (if any formed during heating of the product) the emulsion is left for another 5 minutes at 165 degrees Celsius. Next 10 ml of cold water is added to the dish (to simulate addition of a water-containing food product) and foam formation in terms of amount and maintenance in time noted. Foam amount is then indicated by the maximum observed foam coverage (in % of the dish-surface), which value can range from 0 % to 100 %.

### Composition of emulsions

The water-in-oil emulsions according to Example 1 and Comparative A were made with a composition as set out in Table 1.

**Table 1. Composition of pourable cooking products of Example 1 and Comparative A (numbers represent wt. %, unless otherwise indicated).**

| | Example 1 | Comp. A |
|---|---|---|
| Rapeseed oil | 72 | 72 |
| 30/70 Linseed/Sunflower oil | 8 | 8 |
| ¹RP70 | 2.0 | 2.0 |
| ²Sterol esters | 12 | - |
| ³Lecithin | 0.2 | 0.2 |
| ⁴Beta-carotene | 7 mg/kg | 7 mg/kg |
| Citric acid | 0.25 | 0.25 |
| Water | Balance | Balance |

| | | |
|---|---|---|
| ¹RP70: fully hydrogenated rapeseed oil, having a melting point of about 70 degrees Celsius. ² sterol esters: Generolester NG Deso (a mixture of about 92.5 % sterolesters and about 7.5 wt. % of free sterols), Supplier: BASF. ³ lecithin: Cetinol, Supplier: Sime Darby. ⁴ beta-carotene: added in 30 % oily suspension, whereby final concentration of beta-carotene in emulsion is 7 mg/kg, Supplier: BASF. | | |

### Production of Example 1 and Comparative A

Example 1 was made according to the following method: A pre-mix of the sterol esters was formed by mixing the sterol esters with part of the liquid oil in a ratio of 35:65 and heating to about 70 degrees Celsius to dissolve the sterol esters. Separately a pre-mix of the hardstock fat (RP70) was formed by mixing with part of the liquid oil (also in a ratio of about 35:65) and by heating to about 80 degrees Celsius to dissolve. The citric acid was dissolved in the water, which was heated to 72 degrees Celsius for about 2 minutes to pasteurize. Next, first the sterol ester pre-mix was added to said water-phase under shear, and subsequently the hardstock fat pre-mix was added. The oil-phase was formed by dissolving the beta-carotene and lecithin in the remainder of the liquid oil. Finally, the oil-phase, the water-phase were mixed together under high-shear mixing conditions in a steered vessel (volume: 2 litre) using an Ultra-turrax operating at 3500 rpm. The pourable water-in-oil emulsion was allowed to cool to room temperature.

Comparative A was made according to the process described for Example 1, but without the addition of sterol esters.

### Results

After the emulsions of Example 1 (according to the invention) and of Comparative A (not according to the invention) were made, they were analyzed for foaming behavior and viscosity (Table 2). The emulsions were measured right after production to determine viscosity. Both emulsions were pourable as indicated by having a Bostwick value of more than 10. The emulsions were stable at 20 degrees Celsius (no separation of oil-, and water-phase) for at least 4 weeks. Both pourable water-in-oil emulsion has a D3,3 of below 5.

A sample of the emulsions was heated as described above under 'Determination of Foaming'. During initial heating of the emulsions it was observed that Example 1 showed a greater amount of foam formation (in terms of % covered of the dish surface and in terms of thickness of the foam layer) and also the foam was remained visible for a longer time period compared to Comparative A. Next after the foam in Example 1 and Comparative A had disappeared, 10 ml of cold water was added (as described) to compare foaming behavior in a more controlled manner (e.g. at a controlled emulsion temperature; see Table 2).

**Table 2: viscosity (at 5 degrees Celsius); and foaming behavior after addition of 10 ml of cold water.**

| | Example 1 | Comparative A |
|---|---|---|
| Viscosity (mPa·s) | 1532 | 650 |
| Maximum Foam coverage | 80-100% | 0-20 % |

Clearly the results in Table 2 (and the other observations made) show that the addition of sterol esters to a pourable high-fat water-in-oil emulsion improved the viscosity at relevant temperature of about 5 degrees Celsius (i.e. fridge storage temperature). This ensures that when the consumer takes the product from the fridge and applies it to the pan it is not too fluid and can be more accurately dosed. What is also shown is that adding sterol esters to a comparable pourable water-in-oil composition without added sterol esters, having a comparable overall fat-level, does not lead to a comparable viscosity.

Furthermore, the results in Table 2 show that when 10 ml of cold water (i.e. simulating a water-containing food product) is added to the heat-controlled emulsion according to the invention (Example 1) the foaming behavior is improved. In particular the maximum amount of foam formed greatly increases (Table 2). Furthermore it was observed that also the time foam remains observed is increased. Said improved foaming behavior was apparent when compared to emulsions according the Comparative A (no added sterols). This gives the consumer the impression that frying with pourable water-in-oil emulsions according to the invention is more healthy.

## Claims

1. Edible pourable water-in-oil emulsion suitable for shallow frying comprising:
• 40 to 90 wt. % liquid oil;
• 5 to 55 wt. % of water;
• 1 to 20 wt. % of plant sterol esters;
• 0.5 to 8 wt. % of hardstock fat;
• 0.05 to 5 wt. % of sodium chloride, potassium chloride or a combination thereof;
• one or more coloring agents;
• 0.01 to 3 wt. % of water-in-oil promoting emulsifier.

2. Edible emulsion according to claim 1, comprising from 7 to 18 wt. %, preferably 9 to 16 wt. % and more preferably from 10 to 14 wt. % of plant sterol esters.

3. Edible emulsion according to claim 1 or claim 2, wherein the plant sterol ester is selected from the group comprising esters of β-sitosterol, β-sitostanol, campesterol, campestanol, stigmasterol, brassicasterol, brassicastanol or a mixture thereof and preferably is selected from the groups comprising esters of β-sitosterol, campesterol, stigmasterol, brassicasterol.

4. Edible emulsion according to any one of claims 1 to 3, comprising from 1 to 15 wt. %, preferably from 3 to 10 wt. % and more preferably from 5 to 9 wt. % of free plant sterols, based on total weight of plant sterol esters and free sterols.

5. Edible emulsion according to any one of claims 1 to 4, comprising from 50 to 90 wt. %, preferably from 60 to 89 wt. % and more preferably from 70 to 88 wt. % of liquid oil.

6. Edible emulsion according to any one of claims 1 to 5, comprising from 10 to 40 wt. % and preferably from 15 to 30 wt. % of water.

7. Edible emulsion according to any one of claims 1 to 6, comprising from 0.1 to 4 wt. %, preferably from 0.2 to 3 wt. %, more preferably from 0.3 to 2 wt. % and even more preferably from 0.4 to 1.5 wt. % of sodium chloride, potassium chloride or a combination thereof.

8. Edible emulsion according to any one of claims 1 to 7, comprising from 0.1 to 5 wt. %, preferably from 0.5 to 4 wt. % and even more preferably from 1 to 3 wt. % of hardstock fat

9. Edible emulsion according to any one of claims 1 to 8, comprising from 0.05 to 2 wt. %, preferably from 0.15 to 1.5 wt. % and more preferably form 0.1 to 1 wt. % of water-in-oil promoting emulsifier.

10. Edible emulsion according to any one of claims 1 to 9, wherein the water-in-oil promoting emulsifier comprises lecithin, monoglyceride, diglyceride, citric acid ester or a combination thereof.

11. Edible emulsion according to any one of claims 1 to 10, wherein the emulsion comprises beta-carotene in an amount from 0.5 to 500 mg/kg, preferably from 1 to 100 mg/kg and more preferably from 5 to 50 mg/kg.

12. Process to manufacture the edible pourable water-in-oil emulsion according to any one of claim 1 to 11, comprising the steps:
a) providing a water-phase;
b) providing an oil-phase;
c) mixing the water-phase and the oil-phase to provide the edible pourable water-in-oil emulsion;
wherein the remaining ingredients are added at any of step a), b) or c); or in parts at any combination of said steps.

13. Process according to claim 12, wherein the plant sterol esters and the optionally present free sterols are prepared by dissolving in part of the liquid oil and subsequently added at at any of step a), b) or c); or in parts at any combination of said steps.

14. Process to manufacture the edible pourable water-in-oil emulsion according to claim 12 or claim 13, wherein the water-phase droplets have an average size, as measured in D3,3, of at most 50 micrometer, more preferably of at most 30, even more preferably of at most 20, still even more preferably of at most 10.

15. Use of plant sterol esters in a pourable water-in-oil emulsion to improve foaming behavior, preferably during frying, more preferably to improve the amount of foam during frying, the time a foam layer is maintained during frying or a combination thereof.

## Patentansprüche

1. Essbare fließfähige Wasser-in-ÖI-Emulsion mit Eignung zum Flachbraten, umfassend:
• 40 bis 90 Gew.-% flüssiges Öl,
• 5 bis 55 Gew.-% Wasser,
• 1 bis 20 Gew.-% pflanzliche Sterolester,
• 0,5 bis 8 Gew.-% Hardstockfett,
• 0,05 bis 5 Gew.-% Natriumchlorid, Kaliumchlorid oder einer Kombination davon,
• ein oder mehrere Farbmittel,
• 0,01 bis 3 Gew.-% Wasser-in-Öl-fördernden Emulgator.

2. Essbare Emulsion nach Anspruch 1, umfassend von 7 bis 18 Gew.-%, vorzugsweise von 9 bis 16 Gew.-% und bevorzugter von 10 bis 14 Gew.-% pflanzliche Sterolester.

3. Essbare Emulsion nach Anspruch 1 oder Anspruch 2, wobei der pflanzliche Sterolester aus der Gruppe ausgewählt ist, umfassend Ester von β-Sitosterol, β-Sitostanol, Campesterol, Campestanol, Stigmasterol, Brassicasterol, Brassicastanol oder eine Mischung davon, und vorzugsweise ausgewählt ist aus den Gruppen, die Ester von β-Sitosterol, Campesterol, Stigmasterol, Brassicasterol umfassen.

4. Essbare Emulsion nach irgendeinem der Ansprüche 1 bis 3, umfassend von 1 bis 15 Gew.-%, vorzugsweise von 3 bis 10 Gew.-% und bevorzugter von 5 bis 9 Gew.-% freie pflanzliche Sterole, bezogen auf das Gesamtgewicht der pflanzlichen Sterolester und der freien Sterole.

5. Essbare Emulsion nach irgendeinem der Ansprüche 1 bis 4, umfassend von 50 bis 90 Gew.-%, vorzugsweise von 60 bis 89 Gew.-% und bevorzugter von 70 bis 88 Gew.-% flüssiges Öl.

6. Essbare Emulsion nach irgendeinem der Ansprüche 1 bis 5, umfassend von 10 bis 40 Gew.-% und vorzugsweise von 15 bis 30 Gew.-% Wasser.

7. Essbare Emulsion nach irgendeinem der Ansprüche 1 bis 6, umfassend von 0,1 bis 4 Gew.-%, vorzugsweise von 0,2 bis 3 Gew.-%, bevorzugter von 0,3 bis 2 Gew.-% und sogar bevorzugter von 0,4 bis 1,5 Gew.-% Natriumchlorid, Kaliumchlorid oder eine Kombination davon.

8. Essbare Emulsion nach irgendeinem der Ansprüche 1 bis 7, umfassend von 0,1 bis 5 Gew.-%, vorzugsweise von 0,5 bis 4 Gew.-% und sogar bevorzugter von 1 bis 3 Gew.-% Hardstockfett.

9. Essbare Emulsion nach irgendeinem der Ansprüche 1 bis 8, umfassend von 0,05 bis 2 Gew.-%, vorzugsweise von 0,15 bis 1,5 Gew.-% und bevorzugter von 0,1 bis 1 Gew.-% Wasser-in-ÖI-fördernden Emulgator

10. Essbare Emulsion nach irgendeinem der Ansprüche 1 bis 9, wobei der Wasser-in-ÖI-fördernde Emulgator Lecithin, Monoglycerid, Diglycerid, Zitronensäureester oder eine Kombination davon umfasst.

11. Essbare Emulsion nach irgendeinem der Ansprüche 1 bis 10, wobei die Emulsion beta-Carotin in einer Menge von 0,5 bis 500 mg/kg, vorzugsweise von 1 bis 100 mg/kg und bevorzugter von 5 bis 50 mg/kg umfasst.

12. Verfahren zur Herstellung der essbaren fließfähigen Wasser-in-ÖI-Emulsion nach irgendeinem der Ansprüche 1 bis 11, umfassend die Schritte:
a) Bereitstellen einer Wasser-Phase,
b) Bereitstellen einer Öl-Phase,
c) Mischen der Wasser-Phase und der Öl-Phase, um die essbare fließfähige Wasser-in-ÖI-Emulsion bereitzustellen,
wobei die restlichen Bestandteile irgendeinem der Schritte a), b) oder c) oder in Teilen einer beliebigen Kombination dieser Schritte zugegeben werden.

13. Verfahren nach Anspruch 12, wobei die pflanzlichen Sterolester und die optional vorliegenden freien Sterole durch Auflösen in einem Teil des flüssigen Öls zubereitet werden und nachfolgend einem der Schritte a), b) oder c) oder in Teilen einer beliebigen Kombination dieser Schritte zugegeben werden.

14. Verfahren zur Herstellung der essbaren fließfähigen Wasser-in-ÖI-Emulsion nach Anspruch 12 oder Anspruch 13, wobei die Tröpfchen der Wasser-Phase eine durchschnittliche Größe, gemessen in D3,3, von höchstens 50 Mikrometern, bevorzugt höchstens 30 Mikrometern, sogar bevorzugter höchstens 20 Mikrometern und sogar noch bevorzugter höchstens 10 Mikrometern aufweisen.

15. Verwendung von pflanzlichen Sterolestern in einer fließfähigen Wasser-in-ÖI-Emulsion, um das Schaumverhalten zu verbessern, vorzugsweise während des Bratens, bevorzugter um die Menge des Schaums während des Bratens zu begünstigen, wobei die Zeit einer Schaumschicht während des Bratens oder einer Kombination davon beibehalten wird.

## Revendications

1. Emulsion eau-dans-huile comestible pouvant être versée appropriée pour une cuisson sautée comprenant :
• de 40 à 90 % en masse d'huile liquide ;
• de 5 à 55 % en masse d'eau ;
• de 1 à 20 % en masse d'esters de stérols végétaux ;
• de 0,5 à 8 % en masse de graisse dure ;
• de 0,05 à 5 % en masse de chlorure de sodium, chlorure de potassium ou d'une combinaison de ceux-ci ;
• un ou plusieurs agents colorants ;
• de 0,01 à 3 % en masse d'émulsionnant de promotion eau-dans-huile.

2. Emulsion comestible selon la revendication 1, comprenant de 7 à 18 % en masse, de préférence de 9 à 16 % en masse et encore mieux de 10 à 14 % en masse d'esters de stérols végétaux.

3. Emulsion comestible selon la revendication 1 ou la revendication 2, où l'ester de stérol végétal est choisi dans le groupe comprenant des esters de β-sitostérol, β-sitostanol, campestérol, campestanol, stigmatérol, brassicastérol, brassicastanol ou un mélange de ceux-ci et est de préférence choisi dans les groupes comprenant des esters de β-sitostérol, campestérol, stigmastérol, brassicastérol.

4. Emulsion comestible selon l'une quelconque des revendications 1 à 3, comprenant de 1 à 15 % en masse, de préférence de 3 à 10 % en masse et encore mieux de 5 à 9 % en masse de stérols végétaux libres, sur la base de la masse totale d'esters de stérols végétaux et de stérols libres.

5. Emulsion comestible selon l'une quelconque des revendications 1 à 4, comprenant de 50 à 90 % en masse, de préférence de 60 à 89 % en masse et encore mieux de 70 à 88 % en masse d'huile liquide.

6. Emulsion comestible selon l'une quelconque des revendications 1 à 5, comprenant de 10 à 40 % en masse et de préférence de 15 à 30 % en masse d'eau.

7. Emulsion comestible selon l'une quelconque des revendications 1 à 6, comprenant de 0,1 à 4 % en masse, de préférence de 0,2 à 3 % en masse, encore mieux de 0,3 à 2 % en masse et bien mieux encore de 0,4 à 1,5 % en masse de chlorure de sodium, chlorure de potassium ou d'une combinaison de ceux-ci.

8. Emulsion comestible selon l'une quelconque des revendications 1 à 7, comprenant de 0,1 à 5 % en masse, de préférence de 0,5 à 4 % en masse et encore mieux de 1 à 3 % en masse de graisse dure.

9. Emulsion comestible selon l'une quelconque des revendications 1 à 8, comprenant de 0,05 à 2 % en masse, de préférence de 0,15 à 1,5 % en masse et encore mieux de 0,1 à 1 % en masse d'émulsionnant de promotion eau-dans-huile.

10. Emulsion comestible selon l'une quelconque des revendications 1 à 9, où l'émulsionnant de promotion eau-dans-huile comprend de la lécithine, un monoglycéride, un diglycéride, un ester d'acide citrique ou une combinaison de ceux-ci.

11. Emulsion comestible selon l'une quelconque des revendications 1 à 10, où l'émulsion comprend du béta-carotène dans une quantité de 0,5 à 500 mg/kg, de préférence de 1 à 100 mg/kg et encore mieux de 5 à 50 mg/kg.

12. Procédé de fabrication de l'émulsion eau-dans-huile comestible pouvant être versée selon l'une quelconque des revendications 1 à 11, comprenant les étapes consistant :
a) à fournir une phase d'eau ;
b) à fournir une phase d'huile ;
c) à mélanger la phase d'eau et la phase d'huile pour fournir l'émulsion eau-dans-huile comestible pouvant être versée ;
où les ingrédients restants sont ajoutés dans l'une quelconque de l'étape a), b) ou c) ; ou en parties dans une combinaison quelconque desdites étapes.

13. Procédé selon la revendication 12, où les esters de stérols végétaux et les stérols libres éventuellement présents sont préparés par dissolution en partie de l'huile liquide et sont ensuite ajoutés dans l'une quelconque de l'étape a), b) ou c) ; ou en parties dans une combinaison quelconque desdites étapes.

14. Procédé de fabrication de l'émulsion eau-dans-huile comestible pouvant être versée selon la revendication 12 ou la revendication 13, où les gouttelettes de phase d'eau présentent une taille moyenne, comme mesurée dans D3,3, d'au plus 50 micromètres, encore mieux d'au plus 30, bien mieux encore d'au plus 20, particulièrement de préférence d'au plus 10.

15. Utilisation d'esters de stérols végétaux dans une émulsion eau-dans-huile pouvant être versée pour améliorer le comportement au moussage, de préférence pendant une friture, encore mieux pour améliorer la quantité de mousse pendant la friture, la durée pendant laquelle une couche de mousse est maintenue pendant la friture ou une combinaison de ceux-ci.
